(19) Europäisches Patentamt
European Patent Office
Office européen des brevets

(11) EP 3 472 257 B1

(12) # FASCICULE DE BREVET EUROPEEN

(45) Date de publication et mention de la délivrance du brevet:
**18.08.2021 Bulletin 2021/33**

(21) Numéro de dépôt: **17734805.9**

(22) Date de dépôt: **15.06.2017**

(51) Int Cl.:
***C09K 5/04*** *(2006.01)*

(86) Numéro de dépôt international:
**PCT/FR2017/051562**

(87) Numéro de publication internationale:
**WO 2017/216493 (21.12.2017 Gazette 2017/51)**

(54) **MELANGES REFRIGERANTS POUR UNE UTILISATION AU SEIN DE DISPOSITIFS D'ECHANGE DE CHALEUR DANS LE DOMAINE DE L'AEROSPATIALE**

KÜHLMITTELMISCHUNGEN ZUR VERWENDUNG BEI WÄRMETAUSCHERVORRICHTUNGEN IN DER LUFT- UND RAUMFAHRT

COOLANT MIXTURES FOR USE IN HEAT-EXCHANGE DEVICES IN THE AEROSPACE FIELD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.06.2016 FR 1655576**

(43) Date de publication de la demande:
**24.04.2019 Bulletin 2019/17**

(73) Titulaires:
- **Safran Electrical & Power**
  **31702 Blagnac Cedex (FR)**
- **Centre National de la Recherche Scientifique (CNRS)**
  **75016 Paris (FR)**
- **Institut National Polytechnique de Toulouse**
  **31000 Toulouse (FR)**
- **Ecole Nationale Superieure de Chimie de Lille**
  **59650 Villeneuve d'Ascq (FR)**
- **Université des Sciences et Technologies de Lille**
  **59650 Villeneuve d'Ascq (FR)**

(72) Inventeurs:
- **DELALANDRE, Nicolas**
  **31700 Blagnac (FR)**
- **JOOSSEN, Benjamin Roland Stanislas**
  **62500 Tatinghem (FR)**
- **AUBRY, Jean-Marie**
  **62590 OIGNIES (FR)**
- **GERBAUD, Vincent**
  **31330 Merville (FR)**
- **RODRIGUEZ-DONIS, Ivonne**
  **31400 Toulouse (FR)**

(74) Mandataire: **Regimbeau**
**20, rue de Chazelles**
**75847 Paris Cedex 17 (FR)**

(56) Documents cités:
**FR-A1- 2 246 728** **FR-A1- 2 333 120**
**US-A1- 2005 258 026** **US-A1- 2010 129 618**

- **KHOSHSIMA ALI ET AL: "Vapor-liquid and liquid-liquid equilibrium calculations in mixtures containing non-ionic glycol ether surfactant using PHSC equation", FLUID PHASE EQUILIBRIA, ELSEVIER, AMSTERDAM, NL, vol. 377, 6 juin 2014 (2014-06-06), pages 16-26, XP029013229, ISSN: 0378-3812, DOI: 10.1016/J.FLUID.2014.05.041**
- **TOCHIGI ET AL: "Isobaric vapor-liquid equilibria for water+propylene glycol monomethyl ether (PGME), water+propyleneglycol monomethyl ether acetate (PGMEA), and PGME+PGMEA at reduced pressures", FLUID PHASE EQUILIBRIA, ELSEVIER, AMSTERDAM, NL, vol. 260, no. 1, 29 août 2007 (2007-08-29) , pages 65-69, XP022219037, ISSN: 0378-3812, DOI: 10.1016/J.FLUID.2007.06.006**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 472 257 B1

## Description

La présente invention concerne le domaine des fluides caloporteurs pour les systèmes d'échange de chaleur, notamment les boucles fluides diphasiques, en particulier lorsqu'ils sont utilisés pour le refroidissement de l'électronique de puissance dans l'aérospatiale.

La densification des équipements électroniques dits de puissance au sein des aéronefs accroît les exigences relatives à la performance des systèmes de refroidissement. Le recours à des boucles diphasiques à pompage capillaire ou mécanique peut constituer une solution pertinente, à condition que le fluide caloporteur sur lequel repose de tels échangeurs thermiques satisfasse aux contraintes inhérentes au domaine de l'aérospatiale. En effet, le principe de fonctionnement d'un système de refroidissement diphasique est fondé sur l'évaporation et la condensation d'un fluide dit caloporteur, en cela qu'il permet les échanges thermiques. Aussi, la performance de la boucle diphasique ainsi que son adéquation à un environnement donné dépendent largement des propriétés du fluide.

A l'heure actuelle, les fluides couramment employés dans les boucles de refroidissement au sein des avions sont l'ammoniac, le méthanol, l'acétone, et l'éthanol. Or, leur utilisation s'avère particulièrement dangereuse, dans la mesure où l'ammoniac est toxique (sa $DL_{50}$ n'est que de 350 mg/kg), tandis que les trois autres sont très inflammables (les points d'éclair, notés PE, du méthanol, de l'acétone et de l'éthanol sont respectivement de 11°C, -20°C et 13°C).

Outre les exigences en termes de sécurité, particulièrement cruciale au sein des aéronefs, le fluide caloporteur doit présenter des caractéristiques qui garantissent de bonnes performances en tant que liquide réfrigérant. Ainsi, de fortes enthalpies de vaporisation ($\Delta H_{vap}$ ci-après), capacité calorifique et conductivité thermique favorisent les échanges thermiques.

L'eau pourrait apparaître comme étant le candidat idéal. De fait, il s'agit d'un composé non-toxique, ininflammable, et qui présente une enthalpie de vaporisation très élevée, supérieure à 2000 kJ/kg, autant de caractéristiques que doit comporter un bon fluide caloporteur. Néanmoins, sa température de fusion (Tf ci-après) est beaucoup trop élevée pour permettre son utilisation dans un système de refroidissement faisant partie intégrante d'un aéronef. En effet, l'eau gèle à 0°C, tandis qu'un fluide doit exister à l'état liquide à des températures bien inférieures afin de pouvoir envisager des applications dans un environnement aérospatial. Il importe donc que le fluide caloporteur présente une température de fusion suffisamment basse (typiquement $T_f$ inférieure à -55°C), tout en ayant une température d'ébullition (notée $T_{éb}$) compatible avec les conditions d'usage souhaitées. Il est notamment nécessaire que le fluide ait une bonne volatilité, ce qui se traduit par une température d'ébullition modérée à la pression d'utilisation. Ceci étant, le dioxyde de carbone est en revanche trop volatil, dans la mesure où sa température d'ébullition est si basse qu'il n'existe qu'à l'état gazeux dans les conditions de pression usuelles.

Finalement, le nombre de critères que doit vérifier un fluide caloporteur employé dans le domaine aérospatial est tel qu'il n'existe pas de composé pur connu qui soit pleinement satisfaisant. Par conséquent, le recours à des mélanges s'impose, de façon à pallier les insuffisances d'un fluide pur relativement à une ou plusieurs spécifications.

Le document FR 2 246 728 A1 décrit l'utilisation de solutions aqueuses de monométhyl éther de propylène glycol comme réfrigérant. Le comportement thermodynamique d'un tel mélange binaire fait notamment l'objet de l'article Khoshsima et al. Fluid Phase Equilibria 2014, 377, 16-26. Parmi les mélanges réfrigérants commerciaux, nous pouvons citer la gamme JEFFCOOL® de Huntsman, et plus particulièrement les produits E100, E100N ou P200, qui consistent en de l'éthylène glycol, composé très toxique, ou du propylène glycol dilués dans l'eau. Ces produits mettent en œuvre la possibilité d'abaisser la température de fusion de l'eau lorsqu'elle est en mélange avec un composé adéquat, qui fait alors office d'antigel. Néanmoins, aucune application de ces fluides réfrigérants n'a été envisagée dans un contexte aéronautique, ce qui peut s'expliquer d'une part par leur température d'ébullition trop élevée ($T_{éb}$ supérieure à 100 °C), et d'autre part par un inconvénient majeur lié à la nature même des mélanges. En effet, lorsqu'un mélange s'évapore, les phases vapeur et liquide en équilibre ont de manière générale des compositions différentes, ce qui peut conduire à des phénomènes de vaporisation ou de condensation partielles au sein d'une boucle diphasique, dont il résulte une dégradation des performances thermiques de l'échangeur de chaleur.

Ce problème peut être évité en privilégiant l'utilisation de mélanges azéotropiques, ce qui a d'ores et déjà été proposé dans la littérature. Par définition, un azéotrope est un mélange de deux composés ou plus qui se comporte comme un corps pur, en cela qu'à la composition dite azéotropique, les phases vapeur et liquide ont la même composition. Il est à noter que dans ces conditions, les volatilités relatives des constituants azéotropiques pris deux à deux sont égales à l'unité. De ce fait, un changement d'état liquide - vapeur n'entraîne aucune modification de la composition de la phase vapeur. Ainsi, des mélanges azéotropiques binaires ou ternaires sont commercialisés en tant que fluide réfrigérant par les sociétés 3M, Arkema, Dupont et Solvay. Ces mélanges comportent un ou plusieurs hydrofluoroéthers (HFE), qui ont l'avantage d'être ininflammables et respectueux de l'environnement, puisqu'en particulier ils ne causent pas de détérioration de la couche d'ozone. En revanche, ces produits commerciaux ont une enthalpie de vaporisation inférieure à 250 kJ/kg, ce qui est trop faible pour qu'ils puissent être considérés comme efficaces du point de vue des échanges thermiques.

La présente invention a donc pour but de proposer de nouveaux fluides réfrigérants qui ne constituent pas un

danger pour l'homme ou l'environnement, qui peuvent être utilisés dans un contexte contraignant tel que l'aérospatiale présentant notamment de strictes exigences relatives à la sécurité, tout en assurant l'efficacité de l'échangeur de chaleur au sein duquel il sont incorporés.

Ces différentes spécifications peuvent être exprimées sous la forme de critères que doivent vérifier certains paramètres caractéristiques du fluide :

- Concernant l'impact sur la santé et l'environnement, il importe que le fluide soit non toxique.
- Afin de garantir la sécurité pour une utilisation dans un aéronef par exemple, il est impératif que le fluide soit faiblement inflammable (catégorie 3 selon la classification européenne), ce qui correspond à un point d'éclair PE tel que 23°C ≤ PE < 60°C, ou ininflammable (catégorie 4), c'est-à-dire ayant un PE supérieur ou égal à 60°C.
- Dans le domaine aérospatial, il est indispensable que la température de fusion du fluide soit inférieure à -55°C.
- Le fluide peut être considéré comme ayant une bonne volatilité si sa température d'ébullition est inférieure à 100°C.
- Pour ce qui est des performances thermiques, le fluide doit pouvoir emmagasiner une importante quantité de chaleur, ce qui se traduit par une enthalpie de vaporisation supérieure à 500 kJ/kg.

Ces critères sont repris dans le tableau 1, dans lequel figurent également les caractéristiques des fluides réfrigérants actuellement utilisés dans le domaine de l'aérospatiale (acétone, éthanol, méthanol, ammoniac, dioxyde de carbone, et eau), ainsi que celles de constituants de fluides réfrigérants commerciaux tels que le propylène-glycol que l'on retrouve dans certains produits JEFFCOOL® de Huntsman, ou l'éthoxynonafluorobutane, un hydrofluoroéther (HFE) commercialisé sous le nom de 3M™ Novec™ 7100. Les valeurs qui ne satisfont pas aux spécifications sont en gras et en italique.

Tableau 1 : Caractéristiques de fluides réfrigérants connus

| ***Critère*** | **Toxicité** | **PE** (en °C) | $T_f$ (en °C) | $T_{éb}$ (en °C) | $\Delta H_{vap}$ (kJ/kg) |
|---|---|---|---|---|---|
| | Non | ≥ 23 | < -55 | < 100 | > 500 |
| Acétone | Non | ***-20*** | -95 | 57 | 501 |
| Ethanol | Non | ***13*** | -114 | 78 | 837 |
| Méthanol | ***Oui*** | ***11*** | -97 | 64 | 1098 |
| Ammoniac | ***Oui*** | 132 | -78 | ***-33*** | 1371 |
| Dioxyde de carbone | Non | Aucun | -78 | ***-57*** | ***400*** |
| Eau | Non | Aucun | ***0*** | 100 | 2255 |
| Propylène-glycol | Non | 107 | -60 | ***187*** | 736 |
| HFE 3M Novec 7100 | Non | aucun | -138 | 76 | ***126*** |

Comme cela a déjà été indiqué, aucun composé pur connu ne satisfait à la totalité des critères imposés par le cahier des charges auquel l'invention se propose de répondre.

En revanche, un mélange comprenant de l'eau et au moins un antigel non toxique bien choisi peut avoir une température de fusion inférieure à 0°C, tout en bénéficiant de l'importante capacité calorifique de l'eau, qui agit en outre en tant que retardateur de flamme.

Par ailleurs, si ledit mélange réfrigérant est un azéotrope ou un quasi-azéotrope, son comportement est similaire à celui d'un fluide pur, ce qui permet de limiter le phénomène de vaporisation partielle du mélange qui nuirait à l'efficacité de l'échangeur thermique qui l'incorporerait.

Le demandeur a résolu ce problème technique par la mise au point de nouveaux mélanges azéotropiques ou quasi-azéotropiques qui vérifient l'ensemble des critères précédemment énumérés pour un fluide réfrigérant qui soit notamment susceptible d'application dans le domaine de l'aérospatiale.

Un objet de la présente invention consiste donc en un mélange réfrigérant comprenant de l'eau et l'un au moins des composés choisis parmi le 1-méthoxy-2-propanol et le 1-éthoxy-2-propanol dans les proportions de l'azéotrope correspondant ou dans des proportions quasi-azéotropiques.

Un autre objet de l'invention concerne l'utilisation d'un tel mélange comme fluide caloporteur, notamment dans un échangeur de chaleur pour une application aérospatiale.

Un objet additionnel de la présente invention a trait à un dispositif d'échange de chaleur comprenant comme fluide caloporteur un mélange selon l'invention.

De surcroît, un tel dispositif peut être intégré au sein d'un aéronef ou d'un astronef, ce qui constitue un autre

objet de l'invention.

Enfin, un dernier objet est relatif à un procédé d'obtention d'un mélange de l'invention par distillation fractionnée.

La figure 1 représente le spectre RMN 1 H de l'azéotrope binaire constitué de 1-méthoxy-2-propanol et d'eau dans le DMSO deutéré.
La figure 2 correspond quant à elle au spectre RMN 1H de l'azéotrope ternaire constitué de 1-méthoxy-2-propanol, de 1-éthoxy-2-propanol et d'eau dans le DMSO deutéré.

La toxicité d'un composé peut être quantifiée grâce à sa « dose létale médiane » ou « DL50 », qui correspond à la dose dudit composé qui lorsqu'elle est administrée, par voie orale par exemple, entraîne la mort de 50 % d'une population animale donnée. Elle est exprimée en mg de substance active par kg d'animal. Au sens de la présente invention, un fluide est non toxique si sa $DL_{50}$ orale est supérieure à 500 mg/kg.

Au sens de la présente invention, on entend par « PE » ou « point d'éclair » la température minimale exprimée en degré Celsius à laquelle une substance combustible émet des vapeurs en concentration suffisante pour former avec l'air ambiant un mélange gazeux qui s'enflamme au contact d'une flamme ou d'un point chaud, mais insuffisante pour que la combustion se propage d'elle-même en l'absence de la flamme dite pilote. Selon le règlement (CE) N° 1272/2008, du Parlement européen et du Conseil du 16 décembre 2008 relatif à la classification, à l'étiquetage et à l'emballage des substances et des mélanges, un fluide ayant un PE tel que 23°C ≤ PE < 60°C appartient à la catégorie 3 « faiblement inflammable », la catégorie 4 « ininflammable » correspondant à un PE supérieur ou égal à 60°C.

Par « antigel », on entend au sens de la présente invention un composé qui, lorsqu'il est mélangé à l'eau, abaisse la température de fusion de cette dernière.

Au sens de la présente invention, un « retardateur de flamme » est une substance qui a pour fonction de diminuer le point éclair d'un autre composé.

Par « volatilité relative » de deux constituants i et j, on entend au sens de la présentation le rapport $\alpha_{ij}$ défini selon l'expression suivante :

$$\alpha_{i,j} = \frac{\frac{y_i}{x_i}}{\frac{y_j}{x_j}}$$

où $y_i$ et $y_j$ correspondent respectivement aux fractions molaires des composés i et j dans la phase vapeur, et $x_i$ et $x_j$ correspondent respectivement aux fractions molaires des composés i et j dans la phase liquide.

Au sens de la présente invention, un « quasi-azéotrope » est un mélange de deux composés ou plus qui présente des caractéristiques proches de celles d'un azéotrope. En particulier, au sein d'un mélange quasi-azéotropique les volatilités relatives des constituants de l'azéotrope pris deux à deux sont comprises entre 0,85 et 1,15.

La présente invention concerne en premier lieu un mélange réfrigérant comprenant de l'eau et l'un au moins des composés choisis parmi le 1-méthoxy-2-propanol et le 1-éthoxy-2-propanol dans les proportions de l'azéotrope correspondant ou dans des proportions quasi-azéotropiques.

De manière préférée, le mélange réfrigérant comprend de l'eau, du 1-éthoxy-2-propanol et optionnellement du 1-méthoxy-2-propanol dans les proportions de l'azéotrope correspondant ou dans des proportions quasi-azéotropiques.

Le tableau 2 reprend le cahier des charges que doivent respecter les mélanges de l'invention, et indique les caractéristiques des antigels selon l'invention en regard de celles de l'eau, ce qui permet de faire apparaître la possible complémentarité de l'eau avec l'un et/ou l'autre dans antigels que sont le 1-méthoxy-2-propanol et le 1-éthoxy-2-propanol au sein d'un mélange susmentionné.

Tableau 2 : Caractéristiques de l'eau et des antigels de l'invention

| ***Critère*** | **Toxicité** | **PE** (en °C) | $T_f$ (en °C) | $T_{éb}$ (en °C) | $\Delta H_{vap}$ (kJ/kg) |
|---|---|---|---|---|---|
| | Non | ≥ 23 | < -55 | < 100 | > 500 |
| Eau | Non | Aucun | ***0*** | 100 | 2255 |
| 1-méthoxy-2-propanol 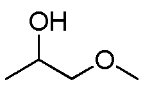 | Non | 34 | -97 | ***118*** | ***461*** |

(suite)

| *Critère* | **Toxicité** | **PE** (en °C) | $T_f$ (en °C) | $T_{éb}$ (en °C) | $\Delta H_{vap}$ (kJ/kg) |
|---|---|---|---|---|---|
| | Non | ≥ 23 | < -55 | < 100 | > 500 |
| 1-éthoxy-2-propanol 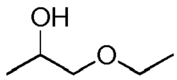 | Non | 42 | -100 | ***132*** | ***308*** |

Les deux azéotropes binaires (1-méthoxy-2-propanol / eau et 1-éthoxy-2-propanol / eau), de même que l'azéotrope ternaire constitué de ces trois composés peuvent être préparés par les méthodes classiques bien connues de l'homme du métier, en particulier par distillation fractionnée à partir des mélanges correspondants initialement riches en eau. Pour un azéotrope donné, le mélange obtenu après une première distillation est redistillé. La température azéotropique, ou température d'ébullition de l'azéotrope est alors mesurée comme étant la température de la vapeur en tête de la colonne de distillation. La composition de l'azéotrope en eau peut être déterminée avec une bonne précision par la méthode de Karl Fisher, tandis que les proportions des autres constituants peuvent être analysées par calorimétrie différentielle à balayage. L'azéotrope peut alors être préparé dans les proportions précédemment déterminées, et une nouvelle distillation plus précise peut être effectuée à ladite température azéotropique à pression donnée. La composition de l'azéotrope ainsi préparé est ensuite plus précisément déterminée grâce à une analyse par RMN 1H. Il est à noter que la précision de cette caractérisation est de 1 %.

La température de fusion, de même que l'enthalpie de vaporisation d'un azéotrope donné sont obtenues à l'aide d'un calorimètre différentiel à balayage.

Pour ce qui est du PE, il est déterminé par la méthode TAG ASTM D56 bien connue de l'homme du métier.

Un autre objet de l'invention est donc la préparation d'un mélange selon elle par distillation fractionnée.

En particulier, l'invention a trait au procédé d'obtention d'un mélange comprenant de l'eau, du 1-éthoxy-2-propanol et optionnellement du 1-méthoxy-2-propanol dans les proportions de l'azéotrope correspondant ou dans des proportions quasi-azéotropiques par distillation fractionnée d'un mélange comprenant de l'eau, du 1-éthoxy-2-propanol et optionnellement du 1-méthoxy-2-propanol.

De manière préférée, il s'agit du procédé d'obtention du mélange ternaire dans les proportions de l'azéotrope correspondant ou dans des proportions quasi-azéotropiques par distillation fractionnée d'un mélange comprenant de l'eau, du 1-éthoxy-2-propanol et du 1-méthoxy-2-propanol.

La caractérisation complète des trois azéotropes de l'invention à la pression atmosphérique figure dans le tableau 3.

Tableau 3 : Caractérisation des mélanges azéotropiques de l'invention *à la pression atmosphérique*

| *Critère* | **PE** (en °C) | $T_f$ (en °C) | $T_{éb}$ (en °C) | $\Delta H_{vap}$ (kJ/kg) | ***Composition*** (% du poids total du mélange) |
|---|---|---|---|---|---|
| | ≥ 23 | < -55 | < 100 | > 500 | |
| Azéotrope binaire 1-méthoxy-2-propanol / eau | 56 | -80 | 97 | 1100 | 1 -méthoxy-2-propanol : 65 % |
| Azéotrope binaire 1-éthoxy-2-propanol / eau | 48 | -80 | 97 | 1136 | 1 -éthoxy-2-propanol : 50 % |
| Azéotrope ternaire 1-méthoxy-2-propanol / eau /1-éthoxy-2-propanol | 60 | -80 | 97 | 1195 | 1 -méthoxy-2-propanol : 41 %<br>1 -éthoxy-2-propanol : 28 % |

Les compositions indiquées dans le tableau 3 correspondent à celles des mélanges azéotropiques. Or, l'invention concerne également des mélanges quasi-azéotropiques, c'est-à-dire, selon elle, des mélanges pour lesquels les volatilités relatives des constituants de l'azéotrope pris deux à deux sont comprises entre 0,85 et 1,15.

Il a été déterminé à l'aide du modèle thermodynamique prédictif UNIFAC ORIGINAL [A. Fredenslund, J. Gmehling, M.L. Michelsen, P. Rasmussen, J.M. Prausnitz, Ind. Eng. Chem. Process Des Dev. 16 (1977) 450-462] que les mélanges de l'invention ont un comportement quasi-azéotropique lorsque le pourcentage massique d'un constituant k, noté $w_k$, appartient à une plage de valeurs centrée sur celle du pourcentage massique dudit constituant au sein du mélange azéotropique, notée $(w_a)_k$, et est tel que $(w_a)_k - 4\ \% \leq w_k \leq (w_a)_k + 4\ \%$.

Avantageusement, un mélange réfrigérant selon l'invention peut donc être constitué d'eau et de 1-méthoxy-2-propanol, le 1-méthoxy-2-propanol représentant entre 61 et 69 %, de préférence entre 64 et 66 %, et de manière encore plus préférée 65 % du poids total du mélange binaire à la pression atmosphérique.

Un autre mélange particulier de l'invention est constitué d'eau et de 1-éthoxy-2-propanol, le 1-éthoxy-2-propanol représentant entre 46 et 54 %, de préférence entre 49 et 51 %, et de manière encore plus préférée 50 % du poids total du mélange binaire à la pression atmosphérique.

Ces deux mélanges sont faiblement inflammables (catégorie 3).

De manière encore plus avantageuse, un mélange ininflammable (catégorie 4) selon l'invention est constitué d'eau, de 1-méthoxy-2-propanol et de 1-éthoxy-2-propanol, et comprend entre 37 et 45 %, de préférence entre 64 et 66 %, et de manière encore plus préférée 41 % en poids de 1-méthoxy-2-propanol, entre 24 et 32 %, de préférence entre 27 et 29 %, et de manière encore plus préférée 28 % en poids de 1-éthoxy-2-propanol et entre 27 et 35 %, de préférence entre 30 et 32 %, et de manière encore plus préférée 31 % en poids d'eau par rapport au poids total du mélange ternaire à la pression atmosphérique.

Il est entendu que la présente invention ne se limite pas aux mélanges susmentionnés considérés à la pression atmosphérique, et que la protection conférée par ce titre s'étend également à ces mélanges sous d'autres conditions de pression. Il est de surcroît évident pour l'homme du métier que la composition et la température d'ébullition d'un mélange azéotropique ou quasi-azéotropique donné dépendent de la pression.

A titre indicatif, la composition et la température d'ébullition de deux des mélanges azéotropiques de l'invention à la pression de 0,5 atm figurent dans le tableau 4 ci-dessous.

Tableau 4 : Caractérisation de deux des mélanges azéotropiques de l'invention à la pression de 0,5 atm

| ***Azéotrope*** | $T_{éb}$ (en °C) | ***Composition*** (% du poids total du mélange) |
|---|---|---|
| 1-méthoxy-2-propanol<br>eau | 80 | 65<br>35 |
| 1-méthoxy-2-propanol<br>1-éthoxy-2-propanol<br>eau | 80 | 43<br>26<br>31 |

La présente invention porte en outre sur l'utilisation d'un mélange selon elle comme fluide caloporteur, avantageusement dans un échangeur de chaleur, tel qu'un échangeur diphasique.

De manière préférée, ladite utilisation est envisagée pour une application aérospatiale.

En particulier, ledit échangeur de chaleur peut consister en une boucle diphasique à pompage capillaire ou mécanique.

Il peut s'agir d'un échangeur diphasique à pompage capillaire, comme les caloduc, CPL, LHP et thermosyphon, bien connus de l'homme du métier, ou d'une boucle diphasique à pompage mécanique.

L'invention concerne également un dispositif d'échange de chaleur comprenant comme fluide caloporteur un mélange selon l'invention.

Ledit dispositif d'échange de chaleur peut notamment consister en un échangeur diphasique à pompage capillaire ou une boucle diphasique à pompage mécanique.

Enfin, un dernier objet de l'invention est un aéronef tel qu'un avion, ou un astronef tel qu'un satellite, une fusée, sonde, capsule, station ou navette spatiales, qui intègre un dispositif d'échange de chaleur selon l'invention.

## Revendications

1. Mélange réfrigérant comprenant de l'eau, du 1-éthoxy-2-propanol et optionnellement du 1-méthoxy-2-propanol dans les proportions de l'azéotrope correspondant ou dans des proportions quasi-azéotropiques.

2. Mélange réfrigérant selon la revendication 1, constitué d'eau et de 1-éthoxy-2-propanol, dans lequel le 1-éthoxy-2-propanol représente entre 46 et 54 %, de préférence entre 49 et 51 %, et de manière encore plus préférée 50 % du poids total du mélange binaire à la pression atmosphérique.

3. Mélange réfrigérant selon la revendication 1, constitué d'eau, de 1-méthoxy-2-propanol et de 1-éthoxy-2-propanol, comprenant :

   - entre 37 et 45 %, et de manière encore plus préférée 41% en poids de 1-méthoxy-2-propanol,

- entre 24 et 32 %, de préférence entre 27 et 29 %, et de manière encore plus préférée 28% en poids de 1-éthoxy-2-propanol, et
- entre 27 et 35 %, de préférence entre 30 et 32 %, et de manière encore plus préférée 31 % en poids d'eau par rapport au poids total du mélange ternaire à la pression atmosphérique.

**4.** Procédé d'obtention d'un mélange selon l'une des revendications 1 à 3 par distillation fractionnée d'un mélange comprenant de l'eau, du 1-éthoxy-2-propanol et optionnellement du 1-méthoxy-2-propanol.

**5.** Utilisation d'un mélange selon l'une des revendications 1 à 3 comme fluide caloporteur.

**6.** Utilisation selon la revendication 5 dans un échangeur de chaleur pour une application aérospatiale.

**7.** Utilisation selon la revendication 6, **caractérisée en ce que** ledit échangeur de chaleur est une boucle diphasique à pompage capillaire ou mécanique.

**8.** Dispositif d'échange de chaleur comprenant un fluide caloporteur, **caractérisé en ce que** ledit fluide caloporteur est un mélange selon l'une des revendications 1 à 3.

**9.** Dispositif d'échange de chaleur selon la revendication 8, **caractérisé en ce que** ledit dispositif d'échange de chaleur est une boucle diphasique à pompage capillaire ou mécanique.

**10.** Aéronef ou astronef équipé d'un dispositif d'échange de chaleur selon l'une des revendications 8 ou 9.

## Patentansprüche

**1.** Kühlmittelmischung, umfassend Wasser, 1-Ethoxy-2-propanol und optional 1-Methoxy-2-propanol im Verhältnis des entsprechenden Azeotrops oder in quasiazeotropen Verhältnissen.

**2.** Kühlmittelmischung nach Anspruch 1, gebildet aus Wasser und 1-Ethoxy-2-propanol, wobei das 1-Ethoxy-2-propanol zwischen 46 und 54%, vorzugsweise zwischen 49 und 51% und noch vorzugsweiser 50% des Gesamtgewichts der binären Mischung bei atmosphärischem Druck darstellt.

**3.** Kühlmittelmischung nach Anspruch 1, gebildet aus Wasser, 1-Methoxy-2-propanol und 1-Ethoxy-2-propanol, umfassend:

- zwischen 37 und 45% und noch vorzugsweiser 41 Gew.-% 1-Methoxy-2-propanol,
- zwischen 24 und 32%, vorzugsweise zwischen 27 und 29% und noch vorzugsweiser 28 Gew.-% 1-Ethoxy-2-propanol, und
- zwischen 27 und 35%, vorzugsweise zwischen 30 und 32% und noch vorzugsweiser 31 Gew.-% Wasser im Verhältnis zum Gesamtgewicht der ternären Mischung bei atmosphärischem Druck.

**4.** Verfahren zur Herstellung einer Mischung nach einem der Ansprüche 1 bis 3 durch fraktionierte Destillation einer Mischung, die Wasser, 1-Ethoxy-2-propanol und optional 1-Methoxy-2-propanol umfasst.

**5.** Verwendung einer Mischung nach einem der Ansprüche 1 bis 3 als Wärmeträgerfluid.

**6.** Verwendung nach Anspruch 5 in einem Wärmetauscher für eine Verwendung in der Luft- und Raumfahrt.

**7.** Verwendung nach Anspruch 6, **dadurch gekennzeichnet, dass** der Wärmetauscher eine Zweiphasenschleife mit Kapillar- oder mechanischem Pumpen ist.

**8.** Wärmetauschvorrichtung, umfassend ein Wärmeträgerfluid, **dadurch gekennzeichnet, dass** das Wärmeträgerfluid eine Mischung nach einem der Ansprüche 1 bis 3 ist.

**9.** Wärmetauschvorrichtung nach Anspruch 8, **dadurch gekennzeichnet, dass** die Wärmetauschvorrichtung eine Zweiphasenschleife mit Kapillar- oder mechanischem Pumpen ist.

**10.** Luft- oder Raumfahrzeug, das mit einer Wärmetauschvorrichtung nach einem der Ansprüche 8 oder 9 ausgestattet ist.

## Claims

**1.** A coolant mixture comprising water, 1-ethoxy-2-propanol and optionally 1-methoxy-2-propanol in the proportions of the corresponding azeotrope or in near-azeotropic proportions.

**2.** The coolant mixture according to claim 1, constituted by water and 1-ethoxy-2-propanol, wherein the 1-ethoxy-2-propanol represents between 46 and 54%, preferably between 49 and 51%, and even more preferably 50% of the total weight of the binary mixture at atmospheric pressure.

**3.** The coolant mixture according to claim 1, constituted by water, 1-methoxy-2-propanol and 1-ethoxy-2-propanol, comprising:

- between 37 and 45%, and even more preferably 41% by weight of 1-methoxy-2-propanol,
- between 24 and 32%, preferably between 27 and 29%, and even more preferably 28% by weight of 1-ethoxy-2-propanol, and
- between 27 and 35%, preferably between 30 and 32%, and even more preferably 31% by weight of water relative to the total weight of the ternary mixture at atmospheric pressure.

**4.** A process for producing a mixture according to any one of claims 1 to 3 by fractional distillation of a mixture comprising water, 1-ethoxy-2-propanol and optionally 1-methoxy-2-propanol.

**5.** Use of a mixture according to any one of claims 1 to 3 as heat-transfer fluid.

**6.** Use according to claim 5 in a heat exchanger for aerospace application.

**7.** Use according to claim 6, **characterized in that** said heat exchanger is a two-phase loop with capillary or mechanical pumping.

**8.** A heat-exchange device comprising a heat-transfer fluid, **characterized in that** said heat-transfer fluid is a mixture according to any one of claims 1 a 3.

**9.** The heat-exchange device according to claim 8, **characterized in that** said heat-exchange device is a two-phase loop with capillary or mechanical pumping.

**10.** An aircraft or spacecraft equipped with a heat-exchange device according to any one of claims 8 or 9.

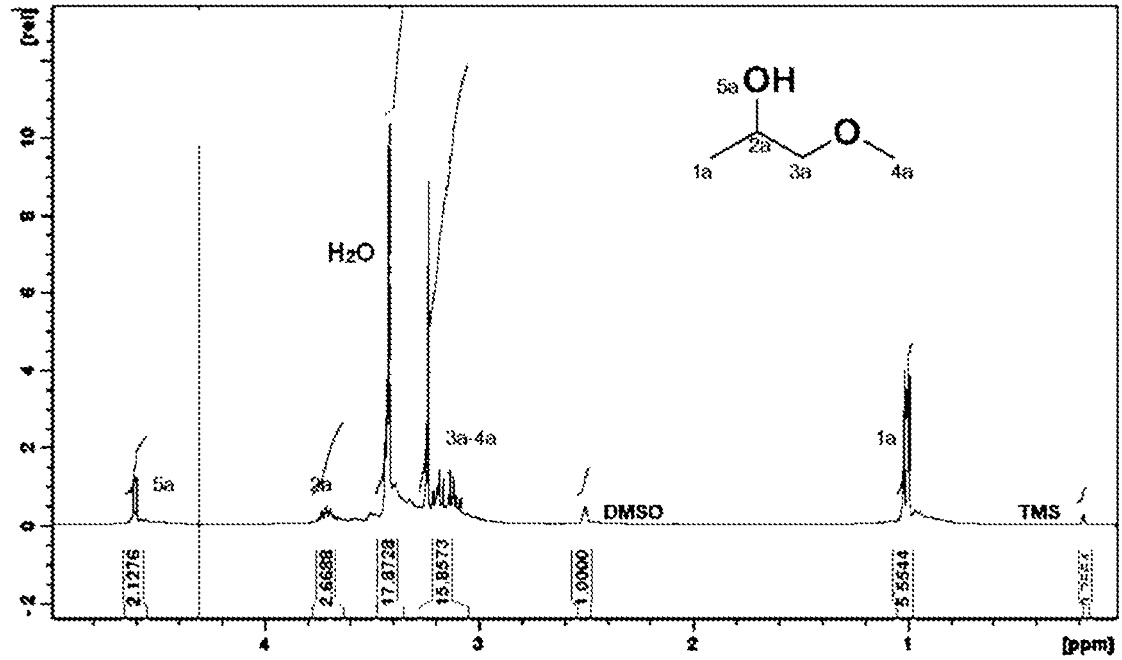
[rel]
H2O
5a
2a
3a-4a
1a
DMSO
TMS
2.1276
2.6688
17.8728
15.8573
1.9000
5.5544
[ppm]

Fig. 1.

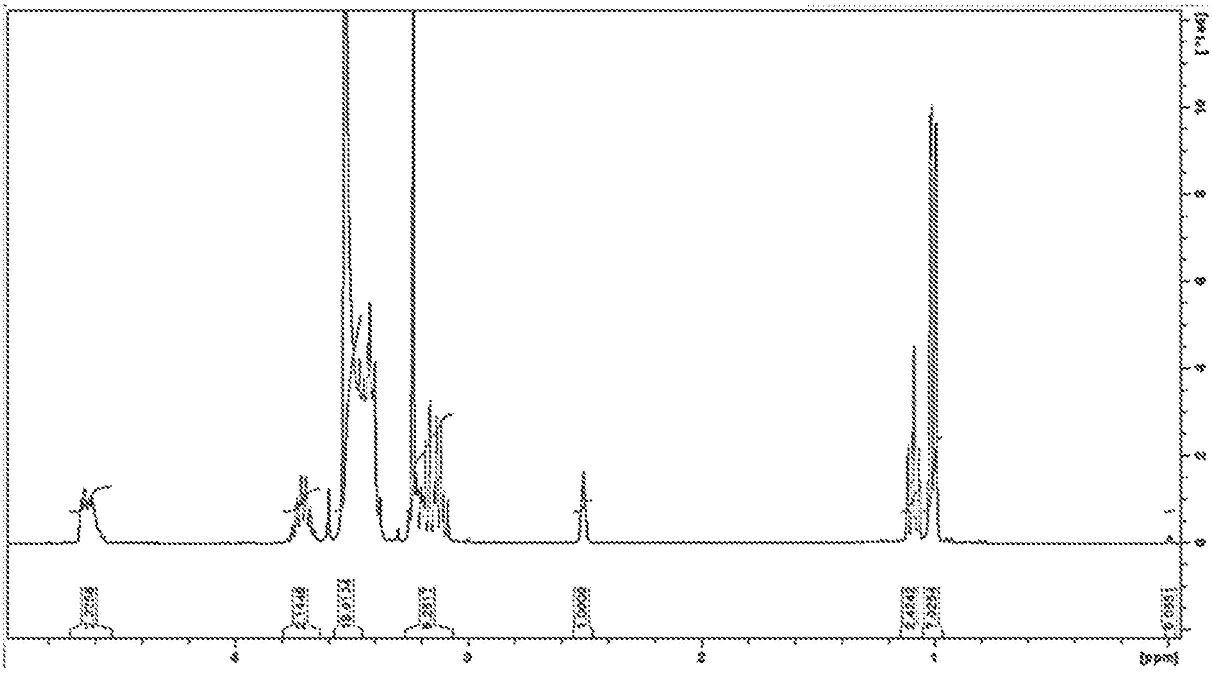

Fig. 2.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2246728 A1


### Littérature non-brevet citée dans la description


- **KHOSHSIMA et al.** *Fluid Phase Equilibria,* 2014, vol. 377, 16-26
- **A. FREDENSLUND ; J. GMEHLING ; M.L. MICHELSEN ; P. RASMUSSEN ; J.M. PRAUSNITZ.** *Ind. Eng. Chem. Process Des Dev.,* 1977, vol. 16, 450-462